**Europäisches Patentamt**

**European Patent Office**

**Office européen des brevets**

(19)

(11) Veröffentlichungsnummer : **0 363 787 B1**

(12) **EUROPÄISCHE PATENTSCHRIFT**

(45) Veröffentlichungstag der Patentschrift :
**20.05.92 Patentblatt 92/21**

(51) Int. Cl.$^5$ : **F23D 17/00**

(21) Anmeldenummer : **89118289.1**

(22) Anmeldetag : **03.10.89**

(54) **Brenner mit elektrischer Zündeinrichtung für gasförmige Brennstoffe und Sauerstoff.**

(30) Priorität : **12.10.88 DD 320663**

(43) Veröffentlichungstag der Anmeldung :
**18.04.90 Patentblatt 90/16**

(45) Bekanntmachung des Hinweises auf die
Patenterteilung :
**20.05.92 Patentblatt 92/21**

(84) Benannte Vertragsstaaten :
**AT DE ES FR GB GR IT NL SE**

(56) Entgegenhaltungen :
**DD-A- 241 457
DE-A- 3 440 088
US-A- 4 443 230**

(73) Patentinhaber : **Deutsche Babcock Energie-
und Umwelttechnik Aktiengesellschaft
Postfach 10 03 47-48
W-4200 Oberhausen 1 (DE)**
Patentinhaber : **DEUTSCHES
BRENNSTOFFINSTITUT GmbH FREIBERG
Halsbrücker Strasse 34
O-9200 Freiberg (DE)**

(72) Erfinder : **Schingnitz, Manfred
Körnerstrasse 19
OD-9200 Freiberg (DE)**
Erfinder : **Seidel, Wolfgang
Nr.124c
OD-9201 Oberbobritzsch (DE)**
Erfinder : **Reuther, Christian
Friedmar-Brendel-Weg 5
OD-9200 Freiberg (DE)**
Erfinder : **Degenkolb, Dietmar
Hubboldtstrasse 58
OD-9200 Freiberg (DE)**
Erfinder : **Sterba, Kurt
Ziolkowskistrasse 19
OD-9200 Freiberg (DE)**
Erfinder : **Riedel, Christian
Strasse des Friedens 103
OD-9200 Freiberg (DE)**

(74) Vertreter : **Müller, Jürgen, Dipl.-Ing.
Deutsche Babcock AG Lizenz-und
Patentabteilung Duisburger Strasse 375
W-4200 Oberhausen 1 (DE)**

EP 0 363 787 B1

## Beschreibung

Die Erfindung betrifft einen Brenner mit integrierter elektrischer Zündeinrichtung und Brennerflammenüberwachungsvorrichtung für gasförmige Brennstoffe und Sauerstoff. Einsatzgebiet des Brenners ist die Erzeugung von CO- und $H_2$-reichen Gasen durch Partialoxydation von gasförmigen Kohlenwasserstoffen in einem unter Druck stehenden Reaktor. Weiteres Einsatzgebiet ist die Anwendung als Zünd- und Stützbrenner in Reaktoren zur Vergasung von staubförmigen und/oder flüssigen Brennstoffen durch partielle Oxydation mit Sauerstoff.

Die erzeugten CO- und $H_2$-haltigen Gase werden zu Synthesegas, Hydrierwasserstoff, Stadtgas, metallurgischen Reduktionsgasen und für ähnliche Zwecke eingesetzt.

In der DD-PS 241 457 ist ein gattungsgemäßer Brenner zur partiellen Oxidation von gasförmigen Kohlenwasserstoffen zu CO- und $H_2$-haltigen Gasen in einem unter Druck stehenden Reaktor beschrieben, bei dem in einem Brenngaskanal ein Zündrohr angeordnet ist, das gegenüber einer metallischen Wand des Brenngaskanals elektrisch isoliert ist, das mit der Hochspannungsseite einer elektrischen Hochspannungszündvorrichtung verbunden ist und das an seinem nach dem Reaktionsraum zugewandten, innerhalb des Brenngaskanals befindlichen Ende einen nach der metallischen Wand des Brenngaskanals gerichteten Elektrodenstift trägt, welcher mit dieser metallischen Wand eine Funkenstrecke bildet. Das genannte Zündrohr ist weiter über ein Absperrventil mit einer Sauerstoffquelle verbunden und weist in der Umgebung der Funkenstrecke Austrittsöffnungen für Sauerstoff auf.

Der Brenngaskanal des Brenners besteht aus einem zylindrischen Abschnitt, an dem sich in Richtung Reaktionsraum ein Konfusor und eine zylindrische Brenngasaustrittsdüse verminderten Durchmessers anschließen. Der Brenngaskanal ist, getrennt durch die metallische Wand, von einem ringförmig ausgebildeten Kanal für Sauerstoff umgeben und das Zündrohr ist exzentrisch so im Brenngaskanal angeordnet, daß sein reaktionsraumseitiges Ende mit dem Elektrodenstift in Strömungsrichtung gesehen vor der Brenngasaustrittsdüse angeordnet ist.

Ein Teil der Austrittsöffnungen im Zündrohr ist in Strömungsrichtung gesehen vor dem Elektrodenstift angeordnet und auf die genannte metallische Wand gerichtet. Das reaktionsraumseitige Ende des Zündrohres ist ebenfalls mit Austrittsöffnung versehen, so daß ein Teil des Sauerstoffs in axialer Richtung aus dem Zündrohr austritt.

Ein Nachteil einer solchen innerhalb des Brenngaskanales liegenden Zündeinrichtung ist, daß an dieser Stelle nicht die eigentliche Brennerflamme gezündet werden kann, sondern zunächst nur eine Hilfszündflamme, die später dann die Hauptflamme zündet. Da hierbei zur Erzeugung einer Hilfsflamme in den Brenngaskanal Sauerstoff eingeführt wird, sind explosionsartige Zündungen und mögliche örtliche Überhitzungen des Materials bis hin zu Verschleißerscheinungen nicht auszuschließen.

Weiterhin wird durch die zusätzliche notwendige Hilfsflammenzündung die Störquellenanzahl bei der Brennerinbetriebnahme erhöht und damit seine Funktionstüchtigkeit eingeschränkt.

Ein weiterer Nachteil dieser Lösung ist, daß zur Flammenzündung ein zusätzlicher Sauerstoffanschluß benötigt wird, der wenn auch nur während des Zündvorganges benötigt, doch zusätzlich druckseitig nach außen abgesichert und überwacht werden muß, was mit erhöhtem maschinen- und sicherheitstechnischen Aufwand verbunden ist.

Die in der DD-WP 241 457 beschriebene Lösung kann außerdem durch die innerhalb des Brenngaskanales angeordnete Zündeinrichtung nur bei drucklosem Reaktor in Betrieb genommen werden und schränkt somit seinen Anwendungsbereich ein.

Das Ziel der Erfindung ist, einen Brenner zu entwickeln, der den hohen Sicherheitsanforderungen im Betriebsregime der partiellen Oxydation von gasförmigen Kohlenwasserstoffen genügt, dessen Zündeinrichtung konstruktiv und fertigungstechnisch einfach gelöst ist und deren Anwendungsbreite erweitert wird.

Insofern betrifft die Erfindung einen Brenner mit integrierter elektrischer Zündeinrichtung und Brennerflammenüberwachung, insbesondere für Druckreaktoren zur Erzeugung von CO- und $H_2$-haltigen Gasen durch partielle Oxydation, der mit gasförmigem Brennstoff und Sauerstoff betrieben wird, wobei der Reaktor drucklos ist oder unter Druck steht.

Die Erfindung geht dabei von einem Brenner aus, der koaxial angeordnete Kanäle für Brenngas und Sauerstoff aufweist, die nach dem Reaktionsraum hin offen sind und die durch wasserdurchströmte Kanäle getrennt bzw. umhüllt sind.

Erfindungsgemäß ist in einem Brenngaskanal ein Zündkabel angeordnet, das mit einer Hochspannungszündvorrichtung außerhalb des Brenners verbunden ist und das an seinem nach dem Reaktionsraum zugewandten Ende in eine metallische Elektrode übergeht, die bis an die Brennerspitze geführt wird und hier eine Funkenstrecke zur metallischen Wand bildet.

Die Elektrode des erfindungsgemäßen Brenners ist im Brenngaskanal so positioniert, daß sie durch den die Düse bildenden Konfusor, ringförmige Düse mund Diffusor hindurchgeht und am achsparallelen Krümmungsradius des Diffusors, d.h. im Wirbelbereich, der den Übergang zum Sauerstoffkanal bildet, die Funkenstrecke zur metallischen Wand hat.

Erfindungsgemäß ist die Anordnung der metallischen Elektrode so gewählt, daß einerseits die Direktzündung des Brenngas-Sauerstoffkanals ermöglicht wird und andererseits die metallische Elektrode durch das nachströmende Brenngas so gekühlt wird, daß die aus dem Reaktionsraum kommende Strahlungswärme keine Schädigungen an ihr bewirkt.

Es entspricht weiter der Erfindung, daß die Einführung des Hochspannungszündkabels in den Brenner durch zwei separate Druckabdichtungen geschieht. Der hierdurch entstehende druckdichte Raum wird als Sicherheitszone gegenüber austretenden Brenngasleckagen genutzt, die schon bei geringem Druckanstieg eine Brennersicherheitsabschaltung einleitet. Die Abdichtung der einzelnen Druckräume erfolgt dabei durch Zündkerzen, durch deren Metalleiter gleichzeitig die Hochspannung übertragen wird.

Aus der konstruktiven Gestaltung des erfindungsgemäßen Brenners resultiert ein Leistungs-Regelbereich von 1:15. Damit ist ein Austausch von Brenngasen unterschiedlicher Heizwerte ohne Eingriffe in die Konstruktion möglich.

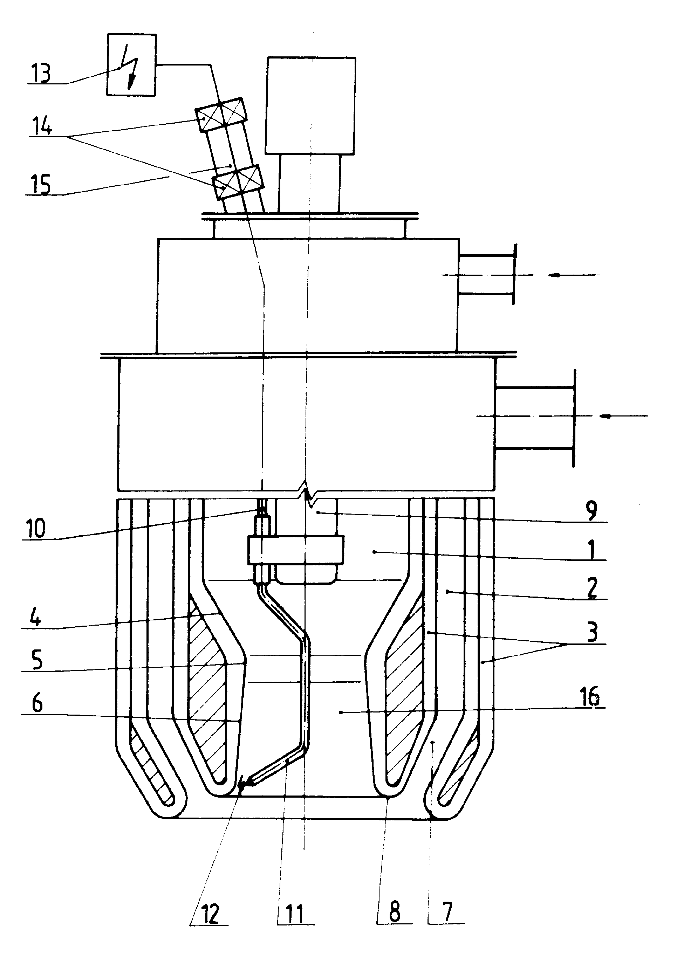

Ein Ausführungsbeispiel des erfindungsgemäßen Brenners ist in der Zeichnung dargestellt.

Der Brenner besteht aus einem zentralen zylindrischen Brenngaskanal 1, einem Sauerstoffringraum 2 und wasserdurchströmten Trennwänden 3.

Das Brenngas strömt durch den zentralen zylindrischen Brenngaskanal 1, den sich anschließender Konfusor 4, die ringförmige Düse 5 und den Diffusor 6 in den Reaktionsraum. Der Sauerstoff gelangt über den Sauerstoffringraum 2 und den koazial angeordneten Ringspalt 7 in diesem Raum, wobei Brenngas und Sauerstoff am Krümmungsradius 8, der gebildet wird durch den Diffusor 6 und den Ringspalt 7, zusammentreffen. In der Achse des Brenngaskanales 1 befindet sich eine Flammenüberwachungseinrichtung 9, an dessen Gehäuse ein Hochspannungs zündkabel 10 befestigt ist, dessen Ende in eine metallische Elektrode 11 übergeht. Diese speziell geformte metallische Elektrode 11, die zunächst in Richtung Brennerachse, dann entlang der Achse und an der Spitze in Richtung Krümmungsradius 8 abgewinkelt verläuft, ist so positioniert, daß zwischen ihrer abgewinkelten Spitze und der metallischen Wand am Krümmungsradius 8 eine Funkenstrecke 12 gebildet wird. Zur Bildung einer Funkenstrecke notwendige Hochspannung wird in einem Zündtransformator 13 erzeugt und mittels Hochspannungszündkabel 10 in den Brenngaskanal 1 eingeführt. Zur Gewährleistung der Druckdichtheit des Brenners gegenüber dem Reaktionsraum sind an der Kabeleinführungsstelle zwei Druckabdichtungen 14 vorgesehen, durch die ein zusätzlicher druckdichter Raum 15 entsteht, der als Sicherheitsdruckraum genutzt wird. Die elektrische Durchführung der Hochspannung durch die zwei Druckabdichtungen erfolgt mittels spezieller Zündkerzen.

Die Inbetriebnahme des Brenners erfolgt folgendermaßen:

Bei Normaldruck oder angehobenem Druck im Reaktionsraum strömt eine bestimmte Menge Sauerstoff oder Sauerstoff/Dampf-Gemisch über den Sauerstoffkanal 2 und den Ringspalt 7 in den Reaktionsraum. Über Brenngaskanal 1 und Brenngasdüse 16, bestehend aus Konfusor 4, ringförmige Düse 5 und Diffusor 6, fließt dazu die entsprechende Menge Brenngas durch den Brenner. Gleichzeitig mit der Einleitung des Brenngases wird an der Funkenstrecke 12 ein Zündfunken gebildet, der das durch Brenngas und Sauerstoff gebildete zündfähige Gemisch im Bereich des Krümmungsradiuses 8 zündet.

Die durch die Kombination aus Konfusor 4, ringförmige Düse 5 Diffusor 6 gebildete Brenngasdüse 16 bewirkt eine ständige Veränderung der Brenngasgeschwindigkeit und erhöht somit den Wirbeleffekt am Krümmungsradius 8 zur Gewährleistung der direkten Flammenzündung in diesem Bereich.

Nach Zündung der Brennerflamme wird der Zündtransformator abgeschaltet und der Reaktor auf Betriebsdruck gefahren.

Durch die speziell angepaßte Form der metallischen Elektrode 11 in der Achse des Brenngaskanales erfolgt durch das nachströmende Brenngas bei brennender Flamme eine solche Kühlung, daß die metallische Elektrode vor der Wärmestrahlung aus dem Reaktionsraum geschützt wird. Gleichzeitig verhindert der Brenngasstrom das Eindringen von festen, verschmutzenden Teilchen aus dem Reaktionsraum in die Flammenüberwachungseinrichtung. Der beschriebene Brenner ist als Pilotbrenner für einen Reaktor zur Partialoxydation von Kohlenstaub eingesetzt. Durch die axialsymmetrische Anordnung des Pilotbrenners kann der Kohlenstaub und das Vergasungsmittel Sauerstoff/Dampf-Gemisch entweder über konzentrisch angeordnete separate Öffnungen um den Pilotbrenner oder in Form weiterer Ringkanäle um den Pilotbrenner selbst zugeführt werden. Durch die ringförmige Zuführung um den Pilotbrenner entsteht ein einheitlicher, kompakter Kohlenstaub/Brenngaskombinationsbrenner.

**Patentansprüche**

1. Brenner mit integrierter elektrischer Hochspannungszündeinrichtung und Brennerflammenüberwachungsvorrichtung für die partielle Oxydation von gasförmigen Brennstoffen zu CO- und $H_2$-haltigen Gasen in Reaktoren, die drucklos oder unter Druck stehen, bestehend aus einem zylindrischen Brenngaskanal (1) mit sich anschließendem Konfusor (4), der in eine ringförmige Brenngasdüse übergeht, aus einem den zylindrischen Abschnitt des Brenngaskanales, dem Konfusor und die ringförmige Brenngasdüse koaxial umgebenden ringförmigen Sauerstoffkanal (2), welche durch wasserdurchströmte Kanäle (3) getrennt bzw. umhüllt sind, dadurch gekennzeichnet, daß sich reaktionsraumseitig an die ringförmige Brenngasdüse (5) ein Diffusor (6) anschließt, dessen Ende mit achsparallelem Krümmungsradius (8) in den Sauerstoffkanal (2, 7) übergeht, der koaxial die Brenngasdüse (16), bestehend aus Konfusor (4), ringförmige Düse (5) und Diffusor (6) umgibt und daß durch den ringförmigen Brenngaskanal (1) ein Hochspannungszündkabel (10) geführt ist, dessen Ende in eine metallische Elektrode (11) übergeht und so angeordnet ist, daß die Funkenstrecke (12) gegen die metallische Brennerwand (8) im Wirbelbereich von Brenngas und Sauerstoff orientiert ist.

2. Brenner nach Anspruch 1, dadurch gekennzeichnet, daß das Hochspannungszündkabel in den Brenner durch zwei separate Druckabdichtungen (14) geführt ist, wodurch ein druckdichter Raum (15) entsteht, der als Sicherheitseinrichtung gegenüber Auftreten von Brenngaslekagen genutzt wird.

**Claims**

1. Burner with integrated electrical high-voltage ignition equipment and burner flame monitoring device and for the partial oxidation of gaseous fuels into gases containing CO and $H_2$ in unpressurised or pressurised reactors, the burner consisting of a cylindrical combustion gas channel (1) with adjoining confusor (4), which passes over into an annular combustion gas nozzle, and of an annular oxygen channel (2) coaxially surrounding the cylindrical portion of the combustion gas channel, the confusor and the annular combustion gas nozzle, which channels are separated or jacketed by water throughflow channels (3), characterised thereby that adjoining the annular combustion gas nozzle (5) at the side of the reactor space is a diffusor (6) of which the end passes by axially parallel radius of curvature (8) into the oxygen channel (2, 7), which coaxially surrounds the combustion gas nozzle (16) consisting of confusor (4), annular nozzle (5) and diffusor (6), and that led through the annular combustion gas channel (1) is a high-voltage ignition cable (10), the end of which passes over into a metallic electrode (11) and is so arranged that the spark gap (12) is oriented towards the burner metallic wall (8) in the eddy region of combustion gas and oxygen.

2. Burner according to claim 1, characterised thereby that the high-voltage ignition cable is led into the burner through two separate pressure seals (14), wherein a pressure-tight space (15) is created which is used as safety arrangement against the arising of combustion gas leakages.

**Revendications**

1. Brûleur comportant, intégrés, un dispositif d'allumage à haute tension et un dispositif de surveillance de flamme de brûleur, pour effectuer l'oxydation partielle de combustibles gazeux en donnant des gaz contenant CO et $H_2$, dans des réacteurs placés sans pression ou sous pression, composé d'un canal de gaz combustible (1) cylindrique, avec un cône convergent (4) s'y raccordant, qui se transforme en une buse de gaz combustible annulaire, d'un canal à oxygène (2) annulaire, qui entoure la section cylindrique du canal de gaz combustible, le cône convergent et la buse de gaz combustible annulaire, les canaux à gaz combustible et oxygène étant séparés, respectivement chemisés au moyen de canaux (3) parcourus par un écoulement d'eau, caractérisé en ce que, du côté de l'enceinte de réaction, se raccorde à la buse de gaz combustible (5) annulaire un diffuseur (6), dont l'extrémité se transforme, avec un rayon de courbure d'axe parallèle, en le canal à oxygène (2,7), qui entoure coaxialement la buse à gaz combustible (16), composée du cône convergent (4), de la buse annulaire (5) et du diffuseur (6) et en ce qu'à travers le canal à gaz combustible (1) est guidé un câble d'allumage à haute tension (10), dont l'extrémité se transforme en une électrode métallique (11) et qui est disposé de telle façon que le trajet des étincelles (12) est orienté vers la paroi de brûleur (8) métallique, dans la zone de tourbillonnement du gaz combustible et de l'oxygène.

2. Brûleur selon la revendication 1, caractérisé en ce que le câble d'allumage à haute tension est guidé dans le brûleur au moyen de deux joints d'étanchéité à pression (14) séparés, faisant qu'est créée une enceinte (15) étanche à la pression, utilisée comme dispositif de sécurité contre l'apparition de fuites de gaz combustible.